# EUROPÄISCHE PATENTSCHRIFT

(11) **EP 1 387 473 B1**
(45) Veröffentlichungstag und Bekanntmachung des Hinweises auf die Patenterteilung: **24.09.2008**
(21) Anmeldenummer: 03400035.6
(22) Anmeldetag: 10.06.2003
(51) Int. Cl.: H02K 49/10

(54) **Vorrichtung zur Bewegung von Einbauteilen in Vakuumanlagen**
Device for moving components in vacuum apparatuses
Dispositif de déplacement d'éléments dans un appareil à vide

(30) Priorität: 12.06.2002 DE 10227365
(43) Veröffentlichungstag der Anmeldung: 04.02.2004
(73) Patentinhaber: Leibniz-Institut für Festkörper- und Werkstoffforschung Dresden e.V., 01069 Dresden (DE)
(72) Erfinder: Goedsche, Thomas, Dr., 01309 Dresden (DE); Lindackers, Dirk, Dr., 01187 Dresden (DE)
(74) Vertreter: Rauschenbach, Marion

(56) Entgegenhaltungen:
- DE-A- 4 235 674
- DE-C- 19 837 851
- US-A- 4 532 816
- US-A- 5 039 061
- US-A- 5 820 104
- PATENT ABSTRACTS OF JAPAN Bd. 016, Nr. 554 (E-1293), 25. November 1992 (1992-11-25) -& JP 04 212435 A (EBARA CORP), 4. August 1992 (1992-08-04)
- PATENT ABSTRACTS OF JAPAN Bd. 017, Nr. 697 (M-1532), 20. Dezember 1993 (1993-12-20) -& JP 05 238683 A (EBARA CORP), 17. September 1993 (1993-09-17)

## Beschreibung

### Anwendungsgebiet der Erfindung

Die Erfindung bezieht sich auf das Gebiet des Maschinenbaus und betrifft eine Vorrichtung zur Bewegung von Einbauteilen in Vakuumanlagen, wie sie z.B. zum positionsgenauen Transport von Werkstücken oder zur Freigabe und/oder Schließen einer Blende eingesetzt werden können.

### Stand der Technik

Zahlreiche Vakuumanlagen und insbesondere auch Hochvakuumanlagen sind mit Vorrichtungen ausgestattet, die eine Bewegung von Einbauteilen in den verschiedensten Richtungen ermöglichen. In den meisten Fällen handelt es sich um lineare Bewegungen zum Transport von Proben innerhalb der Anlage. Dazu werden Linearantriebe eingesetzt, die außerhalb der Anlage befestigt sind und über zusätzliche Anlagen für die Gewährleistung der Dichtheit der Vakuumanlage mit dieser verbunden sind.
Es sind auch Vorrichtungen bekannt, bei denen die lineare Bewegung über entsprechende Vorrichtungsteile außerhalb der Vakuumanlage per Hand in die Vakuumanlage übertragen werden. Auch hier sind besondere Anforderungen an die Dichtheit gestellt.

Weitere Anforderungen für die Arbeit in Vakuumanlagen sind ebenfalls die beschänkte Materialauswahl, insbesondere bei Hochvakuumanlagen, und die erhöhten Anforderungen an die Sauberkeit im Betrieb der Anlage.

Es sind weiterhin zahlreiche Anlagen zum Transport von Bauteilen und Werkstücken bekannt, die über pneumatisch oder magnetisch betriebene Einrichtungen verfügen. Nach der DE 696 01 204 T2 ist eine kolbenstangenlose Zylindereinrichtung bekannt, bei der eine Bewegung der inneren Bewegungseinheit auf die äußere Bewegungseinheit über magnetische Vorrichtungen übertragen wird.

Weiterhin ist aus der DE 37 24 296 A1 eine Wafer-Beschichtungsmaschine mit evakuiertem Transport- und Aufbewahrungssystem für Wafer bekannt. Bei dieser Maschine wird in einer evakuierten Schleuse über pneumatisch betriebene Stößel der Waferkasten gehalten, der Deckel entfernt und nach dem Beschichten wieder aufgelegt. Dies kann auch über magnetisch wirkende Deckelhebevorrichtungen bei Unterdruck realisiert werden.

Nachteilig bei den bekannten Vorrichtungen für Vakuumanlagen ist, dass nur räumlich aufwendige Vorrichtungsteile zur Bewegung von Einbauteilen bekannt sind und dass nur relativ langsame und nur grob positionierbare Bewegungen eingeleitet werden können.

### Darlegung des Wesens der Erfindung

Die Aufgabe der Erfindung besteht in der Angabe einer Vorrichtung zur Bewegung von Einbauteilen in Vakuumanlagen, die schnelle Bewegungen in linearer und/oder axialer Richtung auf Einbauteile in Vakuumanlagen übertragen und mit deren Hilfe eine sehr genaue Positionierung erreicht werden kann.

Die Aufgabe wird durch die in den Ansprüchen angegebene Erfindung gelöst. Weiterbildungen sind Gegenstand der Unteransprüche.

Die erfindungsgemäße Vorrichtung zur schnellen, linearen und/oder axialen Bewegung von Einbauteilen in Vakuumanlagen besteht aus einem über einen gasdichten (Rezepienten)Anschluss fest mit einer Vakuumanlage verbundenen Gehäuse. Das Gehäuse enthält mindestens einen inneren Raum, der mit der Vakuumanlage in permanenter Verbindung steht. Dieser innere Raum ist mindestens teilweise von einem äußeren Raum umgeben, der mindestens gasdicht von dem inneren Raum abgeschlossen ist. In den inneren Raum reicht ein Verbindungselement zu den Einbauteilen hinein, wobei das Verbindungselement innerhalb des inneren Raumes teilweise aus einem magnetischen Material besteht und/oder teilweise von einem magnetischen Material umgeben ist. Im äußeren Raum im Bereich des magnetischen Materials des inneren Raumes ist ein hartmagnetisches Material angeordnet, welches ausschließlich über Kraftschluss mit dem inneren magnetischen Material in Kontakt steht. Dabei ist das magnetische Material im äußeren Raum innerhalb dieses Raumes pneumatisch oder elektrisch bewegbar angeordnet und/oder weist über seinen Umfang eine bewegliche magnetische Orientierung auf.

Vorteilhafterweise ist die Vakuumanlage eine Hochvakuumanlage oder eine Ultra-Hochvakuumanlage.

Ebenfalls vorteilhafterweise ist das Gehäuse an die Vakuumanlage angeflanscht, wobei auch nur der innere Raum an die Vakuumanlage angeflanscht sein kann.

Auch vorteilhafterweise ist der innere Raum hohlzylinderförmig ausgebildet und ist von einem hohlzylinderförmigen äußeren Raum umgeben.

Es ist auch vorteilhafterweise der innere Raum aus Edelstahl gefertigt.

Weiterhin ist es von Vorteil, dass ein stangen- oder rohrförmiges Verbindungselement in den inneren Raum hineinreicht.

Ebenfalls von Vorteil ist es, dass das Verbindungselement an seinem Ende im inneren Raum aus einem magnetischen Material besteht und/oder dort von einem magnetischen Material umgeben und mit diesem fest verbunden ist.

Auch von Vorteil ist es, dass das magnetische Material im äußeren Raum ringförmig ausgebildet ist.

Es ist auch von Vorteil, dass das magnetische Material im inneren und äußeren Raum ein hartmagnetisches Material ist.

Weiterhin vorteilhaft ist es, dass das magnetische Material im inneren Raum ein weichmagnetisches Material und im äußeren Raum ein hartmagnetisches Material ist.

Und auch vorteilhaft ist es, dass das magnetische Material linear und/oder axial bewegbar ist.

Weiterhin vorteilhaft ist es, dass die magnetischen Materialien die sie umgebenden Räume in ihrem äußeren Umfang nahezu vollständig ausfüllen.

Vorteilhaft ist es auch, wenn Bewegungen des magnetischen Materials mit Geschwindigkeiten von 1 bis 3 m/s und/oder Beschleunigungen von 10 bis 30 m/s² realisiert sind.

Durch die erfindungsgemäße Vorrichtung wird es möglich, eine lineare und/oder axiale Bewegung in eine Vakuumanlage auf Einbauteile zu übertragen, die sehr platzsparend ausgebildet ist, eine schnelle Bewegung der Einbauteile ermöglicht, eine gute Positionierbarkeit realisiert und auch Haltezeiten innerhalb eines Bewegungszyklusses möglich macht. Aufgrund des Einsatzes der erfindungsgemäßen Vorrichtung ist die Automatisierung der Prozesse innerhalb der Vakuumanlage möglich. Die Bewegung der Einbauteile über die erfindungsgemäße Vorrichtung ist auch rechnergestützt steuerbar, insbesondere bei Einsatz mehrerer der erfindungsgemäßen Vorrichtungen an einer Vakuumanlage.

Die Funktionsweise der erfindungsgemäßen Vorrichtung ist folgende.
Das Einbauteil ist vorteilhafterweise mit einem stangenförmigen Verbindungselement verbunden, welches mit seinem anderen Ende in den inneren Raum der erfindungsgemäßen Vorrichtung hineinreicht. Dabei entspricht die Länge des Verbindungselementes bei einer linearen Bewegung der Länge des Transportweges des Einbauteiles in der Vakuumanlage abzüglich der Abmessungen des magnetischen Materials in Bewegungsrichtung. Sollen ausschließlich axiale Bewegungen über das Verbindungselement auf das Einbauteil übertragen werden, so können die Abmessungen des inneren und äußeren Raumes der erfindungsgemäßen Vorrichtung im wesentlichen den Abmessungen des magnetischen Materiales entsprechen.
Die Räume müssen nur geringfügig größer sein, um eine möglichst reibungsfreie Bewegung der magnetischen Materialien zu sichern.

Die Verbindung des inneren Raum mit der Vakuumanlage ist dabei direkt ausgebildet und kann beispielsweise noch mit einer Führung für das stangenförmige Verbindungselement versehen sein.
Die Auswahl der magnetischen Materialien hängt unter anderem auch von den benötigten Kräften für die Bewegung ab.

Um den beispielsweise linearen Transport einer Probe auf einem Probenträger in der Vakuumanlage zu realisieren, wird das magnetische Material im äußeren Raum beispielsweise über einen pneumatischen Antrieb in eine Richtung bewegt. Das magnetische Material im inneren Raum, welches über Kraftschluss mit dem magnetischen Material im äußeren Raum verbunden ist, folgt dieser Bewegung und bewegt damit auch das mit dem magnetischen Material des inneren Raumes fest verbundene Verbindungselement und damit den Probenträger oder andere Elemente in linearer Richtung.

Dann kann beispielsweise eine axiale Bewegung eines Probenträgers zur Ablage der Probe erforderlich sein. Dies wäre dann möglich, wenn das äußere magnetische Material im äußeren Raum über seinen Umfang eine wechselnde magnetische Orientierung aufweist. Sofern es sich dabei um ein hartmagnetisches Material handelt kann durch einfaches Drehen diese Drehbewegung auf das ebenfalls hartmagnetische Material welches eine unveränderliche magnetische Orientierung aufweist übertragen werden. Im Falle eines weichmagnetischen Materials im inneren Raum könnte die wechselnde magnetische Orientierung über einen Verbund von Elektromagneten erreicht werden.

Mit der erfindungsgemäßen Vorrichtung werden relativ geringe Kräfte übertragbar. Die Vorrichtung erfordert aber nur geringe Reibungs- und Beschleunigungskräfte zu überwinden. Im Abhängigkeit von den gewünschten Bewegungen ist eine Variationsbreite des Einsatzes der magnetischen Materialien hinsichtlich ihrer magnetischen Kräfte möglich. Für die Übertragung größerer Kräfte sind aber bereits bewährte Vorrichtungen in der Praxis eingeführt.

### Bester Weg zur Ausführung der Erfindung

Im weiteren wird die Erfindung an einem Ausführungsbeispiel näher erläutert.

### Beispiel

An einer Hochvakuumanlage ist das Gehäuse der erfindungsgemäßen Vorrichtung über einen Rezepientenanschluss mit Normflansch ISO-K angeflanscht. Das Gehäuse ist als hohlzylinderförmiges doppelwandiges Rohr ausgebildet und besteht aus Edelstahl und weist die äußeren Abmessungen von Länge = 325 mm, Durchmesser 56 mm auf. Dabei hat das Rohr einen inneren Durchmesser von 50 mm und das innere Rohr einen äußeren Durchmesser von 25 mm und einen inneren Durchmesser von 19 mm. Das innere Rohr besteht aus unmagnetischem Edelstahl. Der Zwischenraum zwischen innerem und äußerem Rohr bildet den äußeren Raum und weist jeweils an seinen Enden einen Pneumatikanschluss auf. Im äußeren Raum befinden sich drei ringförmige Permanentmagnete aus Neodymium-Eisen-Bor (NdFeB) mit den magnetischen Werten Permanenz = 1.150 mT (11500 G), Koerzitivfeldstärke = 860 kA/m (10800 Oe) und den Abmessungen von äußerer Durchmesser = 40 mm, innerer Durchmesser = 23 mm, Dicke = 6 mm. Im inneren Rohr befindet sich eine rohrförmige Stange aus Edelstahl mit den Abmessungen von Durchmesser = 12 mm und Wandstärke = 2mm, die in die Hochvakuumanlage hineinreicht und eine Blende trägt. Am Ende der Stange im inneren Rohr befindet sich ein ringförmgiger Permanentmagnet, der fest mit dem Ende der Stange verbunden ist. Diese Permanentmagnet hat die Abmessungen Durchmesser 18 mm, Dicke = 24 mm.
Mit dieser Vorrichtung wird das schnelle öffnen und Schließen einer Sputterquelle durch einen Blende ermöglicht. Durch Betreiben des pneumatischen Antriebes wird der Permanentmagnet im äußeren Rohr innerhalb von 200 ms über 150 mm bewegt. Die Positionsgenauigkeit beträgt dabei ≤ 0,1,mm.
Mit der erfindungsgemäßen Vorrichtung kann eine Nutzlast von 1 kg bewegt werden.

## Patentansprüche

1. Vorrichtung zur schnellen, linearen und/oder axialen Bewegung von Einbauteilen in Vakuumanlagen, bestehend aus einem über einen gasdichten (Rezepienten)Anschluss fest mit einer Vakuumanlage verbundenen Gehäuse, wobei das Gehäuse mindestens einen inneren Raum enthält, der mit der Vakuumanlage in permanenter Verbindung steht, und dieser innere Raum mindestens teilweise von einem äußeren Raum umgeben ist, der mindestens gasdicht von dem inneren Raum abgeschlossen ist, und in den inneren Raum ein Verbindungselement zu den Einbauteilen hineinreicht, wobei das Verbindungselement innerhalb des inneren Raumes teilweise aus einem magnetischen Material besteht und/oder teilweise von einem magnetischen Material umgeben ist, und im äußeren Raum im Bereich des magnetischen Materials des inneren Raumes ein hartmagnetisches Material angeordnet ist, welches ausschließlich über Kraftschluss mit dem inneren magnetischen Material in Kontakt steht, und das hartmagnetische Material im äußeren Raum innerhalb dieses Raumes pneumatisch oder elektrisch bewegbar ist und/oder über seinen Umfang eine bewegliche magnetische Orientierung aufweist.

2. Vorrichtung nach Anspruch 1, bei der die Vakuumanlage eine Hochvakuumanlage oder eine Ultra-Hochvakuumanlage ist.

3. Vorrichtung nach Anspruch 1, bei der das Gehäuse an die Vakuumanlage angeflanscht ist.

4. Vorrichtung nach Anspruch 1, bei der nur der innere Raum an die Vakuumanlage angeflanscht ist.

5. Vorrichtung nach Anspruch 1, bei der der innere Raum hohlzylinderförmig ausgebildet ist und von einem hohlzylinderförmigen äußeren Raum umgeben ist.

6. Vorrichtung nach Anspruch 1, bei der der innere Raum aus Edelstahl gefertigt ist.

7. Vorrichtung nach Anspruch 1, bei der ein stangen- oder rohrförmiges Verbindungselement in den inneren Raum hineinreicht.

8. Vorrichtung nach Anspruch 1, bei der das Verbindungselement an seinem Ende im inneren Raum aus einem magnetischen Material besteht und/oder dort von einem magnetischen Material umgeben ist.

9. Vorrichtung nach Anspruch 1, bei der das magnetische Material im äußeren Raum ringförmig ausgebildet ist.

10. Vorrichtung nach Anspruch 1, bei der das magnetische Material im inneren Raum ein hartmagnetisches Material ist.

11. Vorrichtung nach Anspruch 1, bei der das magnetische Material im inneren Raum ein weichmagnetisches Material ist.

12. Vorrichtung nach Anspruch 1, bei der das magnetische Material linear und/oder axial bewegbar ist.

13. Vorrichtung nach Anspruch 1, bei der die magnetischen Materialien die sie umgebenden Räume in ihrem äußeren Umfang nahezu vollständig ausfüllen.

14. Vorrichtung nach Anspruch 1, bei der Bewegungen des magnetischen Materials mit Geschwindigkeiten von 1 bis 3 m/s und/oder Beschleunigungen von 10 bis 30 m/s² realisiert wurden.

## Claims

1. Device for the rapid, linear and/or axial movement of fixtures in vacuum plants, which consists of a housing connected firmly to a vacuum plant via a gas-tight (chamber) connection, the housing containing at least one inner space which is permanently connected to the vacuum plant, and this inner space being at least partially surrounded by an outer space which is closed off, at least gas-tight, from the inner space, and a connecting element reaching into the inner space as far as the fixtures, the connecting element within the inner space consisting partially of a magnetic material and/or being partially surrounded by a magnetic material, and there being arranged in the outer space, in the region of the magnetic material of the inner space, a hard-magnetic material which is in contact solely by friction connection with the inner magnetic material, and the hard-magnetic material in the outer space being movable pneumatically or electrically within this space and/or having a movable magnetic orientation over its circumference.

2. Device according to Claim 1, in which the vacuum plant is a high-vacuum plant or an ultra-high-vacuum plant.

3. Device according to Claim 1, in which the housing is flanged to the vacuum plant.

4. Device according to Claim 1, in which only the inner space is flanged to the vacuum plant.

5. Device according to Claim 1, in which the inner space is of hollow-cylindrical design and is surrounded by a hollow-cylindrical outer space.

6. Device according to Claim 1, in which the inner space is manufactured from high-grade steel.

7. Device according to Claim 1, in which a rod-shaped or tubular connecting element reaches into the inner space.

8. Device according to Claim 1, in which the connecting element consists, at its end in the inner space, of a magnetic material and/or is surrounded there by a magnetic material.

9. Device according to Claim 1, in which the magnetic material in the outer space is of annular design.

10. Device according to Claim 1, in which the magnetic material in the inner space is a hard-magnetic material.

11. Device according to Claim 1, in which the magnetic material in the inner space is a soft-magnetic material.

12. Device according to Claim 1, in which the magnetic material is movable linearly and/or axially.

13. Device according to Claim 1, in which the magnetic materials virtually completely fill the spaces surrounding them in their outer circumference.

14. Device according to Claim 1, in which movements of the magnetic material were implemented at speeds of 1 to 3 m/s and/or accelerations of 10 to 30 m/s².

## Revendications

1. Dispositif de déplacement rapide linéaire et/ou axial de composants intégrés dans des installations sous vide, composé d'un boîtier relié à demeure avec une installation sous vide par le biais d'un raccord (de récipient) hermétique au gaz, le boîtier comprenant au moins un espace intérieur qui est en liaison permanente avec l'installation sous vide et cet espace intérieur étant au moins partiellement entouré par un espace extérieur qui est fermé au moins de manière hermétique au gaz par rapport à l'espace intérieur, et un élément de liaison pénètre dans l'espace intérieur vers les composants intégrés, l'élément de liaison à l'intérieur de l'espace intérieur étant partiellement constitué de matériau magnétique et/ou étant partiellement entouré d'un matériau magnétique et un matériau magnétique dur, lequel est exclusivement en contact par adhérence avec le matériau magnétique intérieur, étant disposé dans l'espace extérieur dans la zone du matériau magnétique de l'espace intérieur, et le matériau magnétique dur dans l'espace extérieur peut être déplacé de manière pneumatique ou électrique à l'intérieur de cet espace et/ou présente une orientation magnétique mobile sur son pourtour.

2. Dispositif selon la revendication 1, avec lequel l'installation sous vide est une installation à vide poussé ou une installation à vide très poussé.

3. Dispositif selon la revendication 1, avec lequel le boîtier est fixé par une bride à l'installation sous vide.

4. Dispositif selon la revendication 1, avec lequel seul l'espace intérieur est fixé par une bride à l'installation sous vide.

5. Dispositif selon la revendication 1, avec lequel l'espace intérieur est de forme cylindrique creuse et est entouré d'un espace extérieur de forme cylindrique creuse.

6. Dispositif selon la revendication 1, avec lequel l'espace intérieur est fabriqué en acier inoxydable.

7. Dispositif selon la revendication 1, avec lequel un élément de liaison en forme de tige ou de tube pénètre dans l'espace intérieur.

8. Dispositif selon la revendication 1, avec lequel l'extrémité de l'élément de liaison qui se trouve dans l'espace intérieur se compose d'un matériau magnétique et/ou y est entourée d'un matériau magnétique.

9. Dispositif selon la revendication 1, avec lequel le matériau magnétique dans l'espace extérieur est de forme annulaire.

10. Dispositif selon la revendication 1, avec lequel le matériau magnétique dans l'espace intérieur est un matériau magnétique dur.

11. Dispositif selon la revendication 1, avec lequel le matériau magnétique dans l'espace intérieur est un matériau magnétique tendre.

12. Dispositif selon la revendication 1, avec lequel le matériau magnétique peut être déplacé de manière linéaire et/ou axial.

13. Dispositif selon la revendication 1, avec lequel les matériaux magnétiques remplissent presque entièrement le pourtour extérieur des espaces les entourant.

14. Dispositif selon la revendication 1, avec lequel les mouvements du matériau magnétique ont été réalisés à des vitesses de 1 à 3 m/s et/ou des accélérations de 10 à 30 m/s².
